Europäisches Patentamt

European Patent Office

Office européen des brevets

(11) Publication number: **0 312 232**
**A1**

# EUROPEAN PATENT APPLICATION

(21) Application number: 88309185.2

(51) Int. Cl.4: **B60R 1/06**

(22) Date of filing: 03.10.88

(30) Priority: 10.10.87 GB 8723859

(43) Date of publication of application:
**19.04.89 Bulletin 89/16**

(84) Designated Contracting States:
**DE FR GB SE**

(71) Applicant: **BRITAX WINGARD LIMITED**
**Kingsham Road**
**Chichester, West Sussex P019 2AQ(GB)**

(72) Inventor: **Bottrill, John Moelfre**
**9 Langdale Avenue**
**Chichester West Sussex(GB)**

(74) Representative: **Hollinghurst, Antony**
**Britax Limited Patent Department**
**Chichester West Sussex PO19 2AQ(GB)**

(54) Exterior rear view mirror assembly for a vehicle.

(57) An exterior rear view mirror assembly for a vehicle, of the type in which the orientation of the mirror is arranged to be adjustable in two directions by means of electricaly powered drive means (42, 52), has a part-spherical member (18) adapted to be secured to a vehicle body, a mirror housing (10) having a part-spherical socket (14, 16) adapted to engage with the part-spherical member (18) so as to be angularly moveable thereto about two mutually orthogonal axes, and a mirror mounted fast in the housing (10). A projection (30) on said part-spherical member (18) extends into the interior of the housing (10), and first and second electrically powered drive means (36, 42; 52, 56), each mounted on the interior of the housing (10), are coupled to the projection (30) so as to move the projection (30) relative to the housing (10) in respective directions, the direction of movement of the two drive means (36, 42; 52, 56) being orthogonal to one another.

Fig.2.

## EXTERIOR REAR VIEW MIRROR ASSEMBLY FOR A VEHICLE

This invention relates to an exterior rear view mirror assembly for a vehicle, of the type in which the orientation of the mirror is arranged to be adjustable in two directions by means of electrically powered drive means. The invention has particular, but not exclusive application to an exterior rear view mirror for a commercial vehicle of the type in which the mirror is arranged to be clamped to a so-called D-arm secured to the vehicle body. With this type of mirror, the housing provides a convenient enclosure for accomodating the drive means.

Patent Specification EP-A-0209296 discloses an exterior mirror assembly of this type in which the orientation of the mirror is adjustable relative to its housing about a horizontal axis and the orientation of the housing is adjustable relative to the vehicle body about a vertical axis. Consequently, although both motors are accommodated within the mirror housing, it is necessary to make provision for the orientation of the mirror to be adjusted relative thereto. The present invention aims to provide a mirror assembly of the foregoing type in which the mirror is fixedly mounted within its housing.

According to the invention, an exterior mirror of the foregoing type has a part-spherical member adapted to be secured to a vehicle body, a mirror housing having a part-spherical socket adapted to engage with the part-spherical member so as to be angularly moveable thereto about two mutually orthogonal axes, a mirror mounted fast in the housing, a projection on said spherical member extending into the interior of the housing, and first and second electrically powered drive means, each mounted on the interior of the housing and being coupled to the projection so as to move the projection relative to the housing in a respective direction, the direction of movement of the two drive means being non-parallel to one another.

An embodiment of the invention will now be described, by way of example, with reference to the accompanying drawings, in which;

Figure 1 is an elevational view of a mirror assembly in accordance with the invention, from the side from which the assembly is viewed by a user but with the mirror itself removed from the housing;

Figure 2 is a cross-sectional view taken on the line 2-2 in Figure 1, but with the mirror in place;

Figure 3 is a cross-sectional view taken on the line 3-3 in Figure 1, but with the mirror in place.

Referring to the drawings, a mirror housing 10 has a mirror glass 12 fixedly mounted therein. The edges of a hole 14 in the rear wall of the housing 10, together with a clamping ring 16, together form a part-spherical socket in which a complimentary part-spherical mounting member 18 is retained. Outside the housing, the mounting member 18 includes a surface containing a semi-cylindrical groove 20 arranged to engage with a tubular member, such as a D-arm (not shown) secured to a vehicle body. A clamping member 22, having a complimentary semi-cylindrical groove therein, is adapted to be secured to the mounting member 18 by screws 24 and 26 so as to firmly secure the mounting member 18 to the aforesaid D-arm.

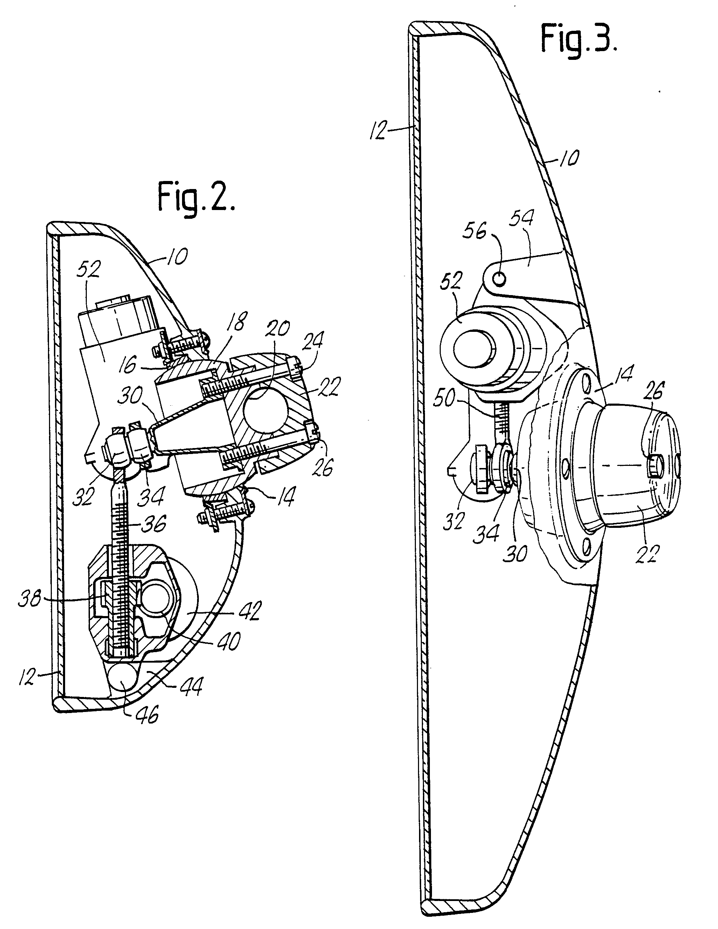

On its inside, the mounting member 18 carries a projection 30 with two universal joints 32 and 34 on its free end. As can best be seen from Figure 2, the universal joint 32 couples the projection 30 to a rod 36 having a male thread engaging in a threaded bore in a pinion 38. In turn, the pinion 38 is in driving engagement with a worm 40 mounted on the output shaft of a motor 42. The motor 42 is mounted on a formation 44 on the interior of the housing 10 by a pivot pin 46.

Similarly, the second universal joint 34 couples the projection 30 to a threaded rod 50 which engages in a threaded bore in a pinion (not shown), which in turn is driven by a worm (not shown) mounted on the output shaft of a second electric motor 52. The motor 52 is secured to a formation 54 on the interior of the housing 10 by a pivot pin 56.

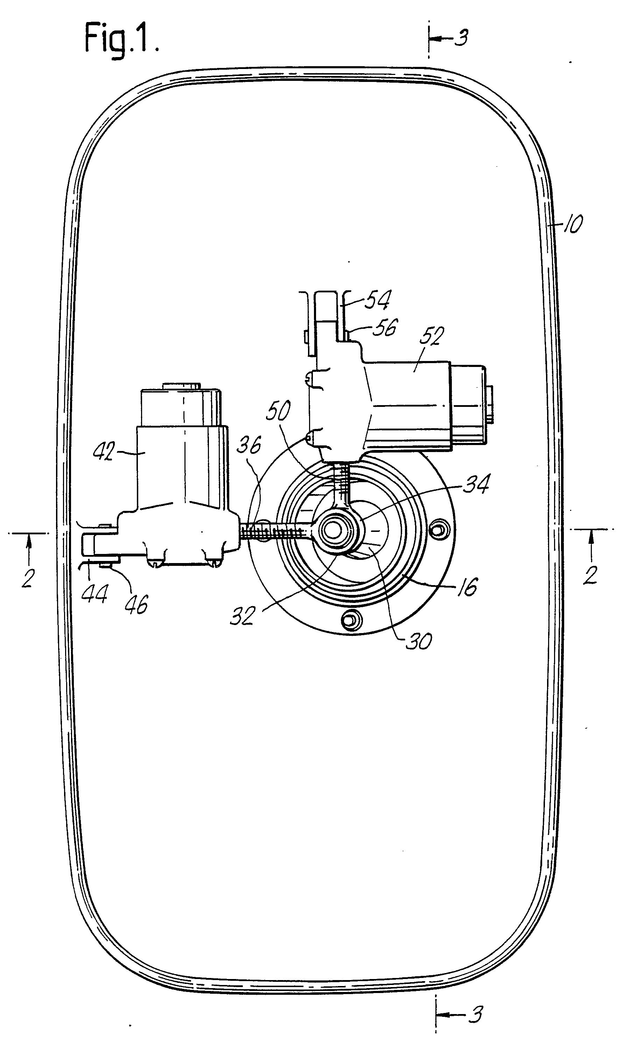

As can be seen from Figure 1, the two rods 36 and 50 are orthogonal to one another and consequently energisation of the respective motor 42, 52 causes movement of the housing about a third axis orthogonal to the axes of both of the rods 36 and 50. The ball joint, formed by the mounting member 18 on the one hand and the clamping ring 16 and the housing 10 on the other, preferably includes a spline and key-way to prevent such angular movement.

## Claims

1. An exterior rear view mirror assembly for a vehicle, in which the orientation of the mirror is arranged to be adjustable in two directions by means of electricaly powered drive means (42, 52), characterised by a part-spherical member (18) adapted to be secured to a vehicle body, a mirror housing (10) having a part-spherical socket (14, 16) adapted to engage with the part-spherical member (18) so as to be angularly moveable thereto about two mutually orthogonal axes, a mirror mounted fast in the housing (10), a projection (30) on said part-spherical member (18) extending into the interior of the housing (10), and first and second electrically powered drive means (36, 42; 52, 56), each mounted on the interior of the housing (10) and being coupled to the projection (30) so as to move the projection (30) relative to the housing (10) in a respective direction, the direction of movement of the two drive means (36, 42; 52, 56) being non-parallel to one another.

2. An exterior rear view mirror assembly according to claim 1, wherein each electrically powered drive means (36, 42; 52, 56) is coupled to the projection (30) by a respective universal joint (32, 34).

3. An exterior rear view mirror assembly according to claim 2, wherein each electrically powered drive means comprises a respective rod (36, 50) having a screw thread which engages in a threaded bore in a respective pinion (38), together with a respective electric motor (42, 52) adapted to drive each pinion (38).

# Fig.1.

Fig.3.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-U-8 531 670 (H.C. LUCHTENBERG GmbH & CO. KG) * Claims 1-4; figures 1,2 * | 1,2 | B 60 R 1/06 |
| A | DE-A-2 538 365 (HSU et al.) * Claim 1; figures 3,4 * | 1,2 | |
| A | DE-A-1 455 596 (MAIER) * Page 2, line 32 - page 4, line 4; figures 1,2 * | 3 | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 16-01-1989 | MAUSSER,T. |

EPO FORM 1503 03.82 (P0401)